# EUROPÄISCHE PATENTANMELDUNG

(11) **EP 4 779 478 A1**
(43) Veröffentlichungstag der Anmeldung: **22.07.2026**
(21) Anmeldenummer: 25152151.4
(22) Anmeldetag: 16.01.2025
(51) Int. Cl.: G06F 11/3668

(54) **BEWERTEN VON (MUTATION) TESTS FÜR SOFTWARE-CODE ZUR STEUERUNG EINES TECHNISCHEN SYSTEMS UNTER VERWENDUNG VON SPRACHMODELLEN (LLM)**

(71) Anmelder: Robert Bosch GmbH, 70442 Stuttgart (DE)
(72) Erfinder: Quante, Jochen, 71640 Ludwigsburg (DE); Woehrle, Matthias, 74321 Bietigheim-Bissingen (DE); Leinberger, Martin, 56073 Koblenz (DE); Flexeder, Andrea, 71729 Erdmannhausen (DE); Hecking-Harbusch, Jesko, 71229 Leonberg (DE); Rausch, Alexander, 76297 Stutensee (DE)

(57) **Zusammenfassung**

Die Erfindung betrifft ein Verfahren (100) zum Bewerten von Tests für einen Software-Code eines technischen Systems (1), umfassend:
- Bereitstellen (101) einer Spezifikation des technischen Systems (1), wobei die Spezifikation zumindest eine Steuerung des technischen Systems (1) durch den Software-Code beschreibt,
- Generieren (102) des Software-Codes für das technische System (1) sowie der Tests für den Software-Code auf Basis der bereitgestellten Spezifikation,
- Injizieren (103) wenigstens eines Fehlers in den Software-Code auf Basis einer Analyse der Spezifikation und/oder des generierten Software-Codes unter Verwendung eines Sprachmodells, wobei der wenigstens eine injizierte Fehler spezifisch für den Software-Code und/oder das technische System (1) ist,
- Bewerten (104) der Tests mit dem wenigstens einen injizierten Fehler im Hinblick auf eine Identifizierbarkeit des wenigstens einen injizierten Fehlers.

## Beschreibung

Die Erfindung betrifft ein Verfahren zum Bewerten von Tests für einen Software-Code eines technischen Systems. Ferner betrifft die Erfindung ein Computerprogramm, eine Vorrichtung sowie ein Speichermedium zu diesem Zweck.

### Stand der Technik

Sprachmodelle (englisch: "Large Language Models", LLMs) können mittels entsprechender Prompts Aufgaben auf bestehendem Programmcode erledigen. Ebenso sind diese Modelle für verschiedenste Aufgaben im der Erstellung von Code nutzbar, wie Codegenerierung oder auch Codereviews. Zum Beispiel kann Code verbessert, Fehler behoben, oder von einer Programmiersprache in eine andere Programmiersprache übersetzt werden. Allerdings sind die Ergebnisse, die das Sprachmodell liefert, häufig nicht korrekt oder entsprechen nicht den gewünschten Qualitätskriterien (Halluzination). Beispielsweise sollen Tests die Korrektheit einer Implementierung überprüfen, jedoch ist bei Tests nicht klar, ob sie zur Absicherung etwas beitragen und damit "korrekt" und "relevant" sind.

Die Herausforderung, Korrektheit garantieren zu müssen, ist insbesondere in sicherheitsrelevanten Systemen wie beispielsweise Fahrzeugen sehr wichtig. Ohne eine fundierte Absicherung können derartige Technologien in der Entwicklung solcher Systeme nicht eingesetzt werden.

Mutation Testing ist eine Möglichkeit, um die Qualität von Tests zu bewerten, indem der zu testende Code leicht verändert ("mutiert") wird und dann geprüft wird, ob die Tests diese Veränderung detektieren. Klassisches Mutation testing (ohne Sprachmodelle) gemäß dem Stand der Technik hat zwei hauptsächliche Probleme: Diese Art von Mutation testing kann nur auf Basis von Software-Code ausgeführt werden. Doch selbst wenn man nur Software-Code betrachtet, ist eine Herausforderung bei Mutation testing, wie Mutationen verhindert werden können, die eigentlich keinen Effekt haben ("equivalent mutants"), und die Operationen nicht zu unspezifisch und nicht auf einen ganz speziellen Software-Code zugeschnitten sind, sodass die injizierten Fehler nicht echte Fehler repräsentieren und damit die Aussage des Mutation testing verfälschen.

Klassisches Mutation testing benutzt generische Operatoren (auf tiefer Ebene), um Software-Code (merklich und mehrfach) zu verändern. Wenn ein Test eine dieser Änderungen detektieren kann, dann hat der Test einen Beitrag. Das Problem ist, dass bei diesem klassischen Mutation testing nicht klar ist, ob Mutationen wirklich eine Auswirkung auf die Ausführung haben (gegeben den Kontext) und man daher oft nicht weiß, ob ein Test nicht fehlschlägt, weil er nicht gut ist oder weil es gar keine Auswirkung gibt. Ebenso ist ein Problem, dass mit solchen Ansätzen eine Vielzahl von Mutanten generiert wird, die immer die gleichen Fehler generieren. Dies ist problematisch, da die Vielzahl keinen Mehrwert bietet, funktionale Fehler zu finden und den Aufwand einer folgenden Analyse erhöht.

### Offenbarung der Erfindung

Gegenstand der Erfindung ist ein Verfahren mit den Merkmalen des Anspruchs 1, ein Computerprogramm mit den Merkmalen des Anspruchs 9, eine Vorrichtung mit den Merkmalen des Anspruchs 10 sowie ein
computerlesbares Speichermedium mit den Merkmalen des Anspruchs 11. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm, der erfindungsgemäßen Vorrichtung sowie dem erfindungsgemäßen computerlesbaren Speichermedium, und jeweils umgekehrt, so dass bezüglich der Offenbarung der Erfindung stets auch eine wechselseitige Bezugnahme möglich ist.

Gegenstand der Erfindung ist insbesondere ein Verfahren zum Bewerten von Tests für einen Software-Code eines technischen Systems, insbesondere eines Fahrzeugs oder eines Roboters, bspw. eines Industrieroboters, umfassend:
- Bereitstellen einer Spezifikation des technischen Systems, wobei die Spezifikation zumindest eine Steuerung des technischen Systems durch den Software-Code beschreibt, d.h. beispielsweise wie wenigstens ein Sensor des technischen Systems ausgelesen und/oder wenigstens ein Aktor des technischen Systems angesteuert wird,
- Generieren des Software-Codes für das technische System sowie der Tests für den Software-Code auf Basis der bereitgestellten Spezifikation, wobei das Generieren vorzugsweise automatisiert erfolgt,
- Injizieren wenigstens eines Fehlers in den Software-Code auf Basis einer Analyse der Spezifikation und/oder des generierten Software-Codes unter Verwendung eines (großen) Sprachmodells (englisch: "Large Language Model"), wobei der wenigstens eine injizierte Fehler spezifisch für den Software-Code und/oder das technische System ist, wobei das Injizieren vorzugsweise automatisiert erfolgt, wobei das Injizieren des wenigstens einen Fehlers insbesondere eine gezielte Modifikation des Software-Codes ist, um einen Fehler bei einer Ausführung des Software-Codes zu erzeugen,
- Bewerten der Tests im Hinblick auf eine Identifizierbarkeit des wenigstens einen injizierten Fehlers, wodurch insbesondere bewertet werden kann, ob das Identifizieren des wenigstens einen injizierten Fehlers im Rahmen der Tests einen Beitrag zu einer Absicherung des technischen Systems leisten kann.

Das Sprachmodell kann auch ein multi-modales Maschinenlernmodell sein, das zumindest Text als Eingabe verarbeiten und Text als Ausgabe bereitstellen kann. Im Rahmen der generierten Tests kann vorgesehen sein, dass eine Kombination aus dem Software-Code und dem technischen System geprüft wird. Dabei kann im Rahmen der Tests jeweils eine Ansteuerung des technischen Systems auf Basis des Software-Codes durchgeführt werden. Das Sprachmodell kann in anderen Worten zunächst die Spezifikation und/oder den Software-Code analysieren, um sicherzustellen, dass der wenigstens eine injizierte Fehler spezifisch für den Software-Code und/oder das technische System ist. In anderen Worten, wird im Rahmen des Bewertens insbesondere bewertet, wie präzise die generierten Tests den wenigstens einen injizierten Fehler identifizieren können. Durch das Verfahren gemäß der Erfindung kann eine Effektivität des wenigstens einen injizierten Fehlers für ein Testen des Software-Codes bewertet werden. So kann sichergestellt werden, dass der Software-Code in einem ausreichenden Maße getestet wird. Dadurch können besser Schwachstellen in dem Software-Code erkannt und ausgebessert werden, wodurch eine Sicherheit und eine Stabilität des Software-Codes erhöht werden kann.

Es ist in einer Alternative auch denkbar, dass in die bereitgestellte Spezifikation wenigstens ein Fehler injiziert wird, der spezifisch für das technische System ist und erst anschließend wie voranstehend beschrieben der Software-Code auf Basis der Spezifikation mit dem wenigstens einen injizierten Fehler generiert wird. Zusätzlich kann auch in dieser Alternative wenigstens ein Fehler in den generierten Software-Code injiziert werden, wie voranstehend beschrieben.

Ferner kann im Rahmen der Erfindung vorgesehen sein, dass auch das Generieren unter Verwendung des Sprachmodells oder eines weiteren Sprachmodells durchgeführt wird. Dies ermöglicht eine automatisiertes und effizientes Generieren des Software-Codes und/oder der Tests basierend auf der Spezifikation des technischen Systems.

Es kann ferner möglich sein, dass das Generieren und das Injizieren in einem gemeinsamen Schritt auf Basis einer entsprechenden Eingabe (englisch: "Prompt") an das Sprachmodell durchgeführt werden. Die entsprechende Eingabe kann demnach eine Anweisung umfassen, das Generieren und das Injizieren auf Basis der bereitgestellten Spezifikation durchzuführen. So kann vorteilhaft ein Zwischenschritt eingespart und eine Effizienz des Verfahrens erhöht werden.

Es kann im Rahmen der Erfindung vorgesehen sein, dass die injizierten Fehler funktionale Fehler sind, sodass der Software-Code weiterhin kompilierbar ist. Dadurch können Tests durchgeführt werden, die eine korrekte Funktion des Software-Codes, bzw. des technischen Systems, testen. Dies ermöglicht insbesondere eine realitätsnähere Evaluierung des Software-Codes.

Das Verfahren kann ferner umfassen:
- Vergleichen des generierten Software-Codes mit dem Software-Code mit dem wenigstens einen injizierten Fehler, um eine Test-Abdeckung des Software-Codes mit dem wenigstens einen injizierten Fehler zu ermitteln,
- Injizieren wenigstens eines weiteren Fehlers in den Software-Code mit dem wenigstens einen injizierten Fehler in Abhängigkeit von einem Ergebnis des Vergleichens, um die Test-Abdeckung zu erhöhen.

Die Test-Abdeckung charakterisiert beispielsweise, in wie viele oder auch in welche Bereiche des Software-Codes ein jeweiliger Fehler injiziert wurde. Dieser Vergleich kann ebenso durch ein/das (weitere) Sprachmodell und/oder auch durch andere Techniken wie das sogenannte "Differential fuzzing" erstellt werden.

Ein weiterer Vorteil im Rahmen der Erfindung ist erzielbar, wenn das Bewerten umfasst:
- Durchführen der generierten Tests, wobei insbesondere im Rahmen eines jeweiligen Tests oder wenigstens eines der Tests das technische System angesteuert wird, beispielsweise ein Sensor und/oder ein Aktor des technischen Systems,
- Prüfen, ob der wenigstens eine injizierte Fehler durch die generierten Tests identifiziert wird.

Dabei kann vorgesehen sein, dass eine jeweilige resultierende Ausgabe der generierten Tests dahingehend analysiert wird, ob der wenigstens eine injizierte Fehler durch den jeweiligen Test identifiziert wurde. Demnach kann im Rahmen des Bewertens eine Abdeckung, d.h. ob und wie viele injizierte Fehler identifiziert werden, bzw. wurden, ein Güte-, bzw. Qualitätskriterium sein.

Außerdem kann es im Rahmen der Erfindung von Vorteil sein, dass im Rahmen des Injizierens wenigstens zwei alternative Software-Codes mit jeweils wenigstens einem injizierten Fehler generiert werden und im Rahmen des Bewertens die Tests für die wenigstens zwei alternativen Software-Codes separat bewertet werden. In anderen Worten können die generierten Tests zunächst für einen erste Version des Software-Code, beispielsweise mit einem ersten injizierten Fehler, und anschließend für eine zweite Version des Software-Codes, beispielsweise mit einem zweiten injizierten Fehler, durchgeführt werden. Anschließend könnte jeweils für die erste Version und dann für die zweite Version bewertet werden, wie präzise der erste, bzw. der zweite, injizierte Fehler im Rahmen der Tests identifiziert werden konnte.

Ein weiterer Vorteil kann im Rahmen der Erfindung erzielt werden, wenn der wenigstens eine injizierte Fehler spezifisch für einen technischen Kontext des technischen Systems und/oder des Software-Codes ist. Wenn das technische System ein Fahrzeug ist, kann der technische Kontext entsprechend beispielsweise ein Automotive-Bereich sein. Generell kann im Umfeld von eingebetteten Systemen auf das Domänenwissen der Fehler im Kontext von Sensoren und Aktuatoren zurückgegriffen werden. Dies kann im Sprachmodell schon antrainiert worden sein, oder durch weitere Dokumentationen bereit gestellt werden. Dies ermöglicht eine verbesserte Identifizierung von Schwachstellen im Software-Code, die sich direkt auf den Betrieb des technischen Systems auswirken können. Die Einbindung der Kontexte der Spezifikation und/oder des Software-Codes kann die Entwicklung von Tests unterstützen, die relevante Szenarien abbilden und somit die Robustheit des technischen Systems effektiver bewerten können.

Es ist möglich, dass das erfindungsgemäße Verfahren bei einem Fahrzeug zum Einsatz kommt, d.h., dass das technische System ein Fahrzeug ist. Das Fahrzeug kann bspw. als ein Kraftfahrzeug und/oder Personenkraftfahrzeug und/oder zumindest teilweise automatisiertes/autonomes Fahrzeug ausgebildet sein. Das Fahrzeug kann eine Fahrzeugeinrichtung, bspw. zur Bereitstellung einer autonomen Fahrfunktion und/oder ein Fahrerassistenzsystem aufweisen. Die Fahrzeugeinrichtung kann dazu ausgeführt sein, das Fahrzeug zumindest teilweise automatisch zu steuern und/oder zu beschleunigen und/oder abzubremsen und/oder zu lenken.

Ebenfalls Gegenstand der Erfindung ist ein Computerprogramm, insbesondere Computerprogrammprodukt, umfassend Befehle, die bei der Ausführung des Computerprogrammes durch wenigstens einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. wenigstens ein Computer vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung kann ein computerlesbares Speichermedium sein, welches das erfindungsgemäße Computerprogramm aufweist und/oder Befehle umfasst, die bei der Ausführung durch wenigstens einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein. Alternativ oder zusätzlich kann zumindest einer der offenbarten Verfahrensschritte computer-implementiert sein und/oder automatisiert durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

Es zeigen:

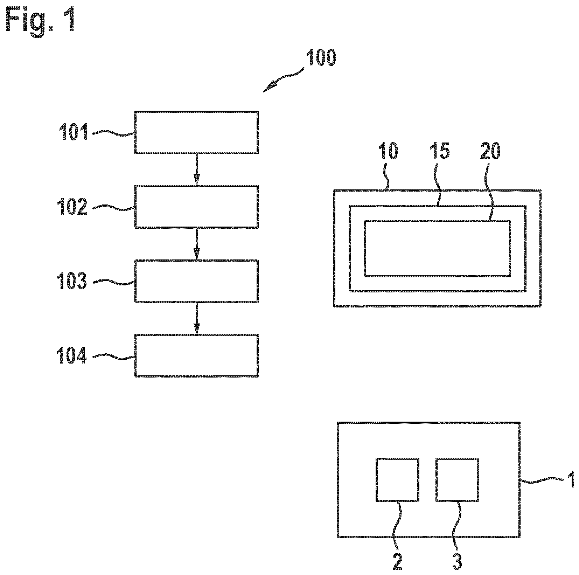

Fig. 1 eine schematische Visualisierung eines Verfahrens, eines technischen Systems, einer Vorrichtung, eines Speichermediums sowie eines Computerprogramms gemäß Ausführungsbeispielen der Erfindung.

In Fig. 1 sind ein Verfahren 100, ein technisches System 1 mit einem Sensor 2 und einem Aktor 3, eine Vorrichtung 10, ein Speichermedium 15 sowie ein Computerprogramm 20 gemäß Ausführungsbeispielen der Erfindung schematisch dargestellt.

Fig. 1 zeigt insbesondere ein Ausführungsbeispiel für ein Verfahren 100 zum Bewerten von Tests für einen Software-Code eines technischen Systems 1. In einem ersten Schritt 101 wird eine Spezifikation des technischen Systems 1 bereitgestellt, wobei die Spezifikation zumindest eine Steuerung des technischen Systems 1 durch den Software-Code beschreibt. In einem zweiten Schritt 102 wird der Software-Codes für das technische System 1 sowie die Tests für den Software-Code auf Basis der bereitgestellten Spezifikation generiert. In einem dritten Schritt 103 wird wenigstens ein Fehler in den Software-Code auf Basis einer Analyse der Spezifikation und/oder des generierten Software-Codes unter Verwendung eines Sprachmodells injiziert, wobei der wenigstens eine injizierte Fehler spezifisch für den Software-Code und/oder das technische System 1 ist. In einem vierten Schritt 104 werden die Tests im Hinblick auf eine Identifizierbarkeit des wenigstens einen injizierten Fehlers bewertet.

Gemäß Ausführungsbeispielen der Erfindung wird insbesondere ein (großes) Sprachmodell (englisch: "Large Language Model", LLM) verwendet, um Mutationen zu erzeugen, d.h. verschiedene Versionen eines Software-Codes mit jeweils unterschiedlichen injizierten Fehlern. Durch Prompting bzw. fine tuning kann das Sprachmodell dabei Kontext- und Code-spezifische Mutationen in den Software-Code injizieren und damit das "equivalent mutant problem" mindern. Weiterhin können auch auf Basis der Spezifikation selbst (und natürlich MischFormen) Mutationen, die relevant für den Software Code und das konkrete technische System sind, durchgeführt werden.

Vorteilhaft können durch das Verfahren gemäß der Erfindung durch Berücksichtigung der Spezifikation detaillierte Informationen genutzt und die Mutationen, bzw. die injizierten Fehler, weiter verbessert werden, indem dem "mutation agent", d.h. dem Sprachmodell, zusätzliche Information bereitgestellt werden, z.B. konkret bekannte Fehlerfälle aus der Vergangenheit und typische Probleme in der Ansteuerung von Aktuatoren.

Durch das Verfahren kann ferner vorteilhaft bewertet werden, welchen Beitrag ein generierter Test liefert. Dies kann neue Integrationen ermöglichen, z.B. durch höhere Effizienz kann das Verfahren gemäß der Erfindung in ein interaktives Setup integriert werden. Ebenso kann ein Test-Ingenieur direkt Mutationen auf Basis eines vorliegenden technischen Systems 1, bzw. der entsprechenden Spezifikation, erzeugen. Dies kann schließlich zu höherer Qualität der generierten Tests und damit auch zu höherer Qualität des getesteten technischen Systems 1 beitragen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Verfahren (100) zum Bewerten von Tests für einen Software-Code eines technischen Systems (1), umfassend:
- Bereitstellen (101) einer Spezifikation des technischen Systems (1), wobei die Spezifikation zumindest eine Steuerung des technischen Systems (1) durch den Software-Code beschreibt,
- Generieren (102) des Software-Codes für das technische System (1) sowie der Tests für den Software-Code auf Basis der bereitgestellten Spezifikation,
- Injizieren (103) wenigstens eines Fehlers in den Software-Code auf Basis einer Analyse der Spezifikation und/oder des generierten Software-Codes unter Verwendung eines Sprachmodells, wobei der wenigstens eine injizierte Fehler spezifisch für den Software-Code und/oder das technische System (1) ist,
- Bewerten (104) der Tests im Hinblick auf eine Identifizierbarkeit des wenigstens einen injizierten Fehlers.

2. Verfahren (100) nach Anspruch 1,
**dadurch gekennzeichnet,**
**dass** auch das Generieren (102) unter Verwendung des Sprachmodells oder eines weiteren Sprachmodells durchgeführt wird.

3. Verfahren (100) nach Anspruch 2,
**dadurch gekennzeichnet,**
**dass** das Generieren (102) und das Injizieren (103) in einem gemeinsamen Schritt auf Basis einer entsprechenden Eingabe an das Sprachmodell durchgeführt werden.

4. Verfahren (100) nach einem der vorhergehenden Ansprüche,
**dadurch gekennzeichnet,**
**dass** die injizierten Fehler funktionale Fehler sind, sodass der Software-Code weiterhin kompilierbar ist.

5. Verfahren (100) nach einem der vorhergehenden Ansprüche,
**dadurch gekennzeichnet,**
**dass** das Verfahren (100) ferner umfasst:
- Vergleichen des generierten Software-Codes mit dem Software-Code mit dem wenigstens einen injizierten Fehler, um eine Test-Abdeckung des Software-Codes mit dem wenigstens einen injizierten Fehler zu ermitteln,
- Injizieren wenigstens eines weiteren Fehlers in den Software-Code mit dem wenigstens einen injizierten Fehler in Abhängigkeit von einem Ergebnis des Vergleichens, um die Test-Abdeckung zu erhöhen.

6. Verfahren (100) nach einem der vorhergehenden Ansprüche,
**dadurch gekennzeichnet,**
**dass** das Bewerten (104) umfasst:
- Durchführen der generierten Tests,
- Prüfen, ob der wenigstens eine injizierte Fehler durch die generierten Tests identifiziert wird.

7. Verfahren (100) nach einem der vorhergehenden Ansprüche,
**dadurch gekennzeichnet,**
**dass** im Rahmen des Injizierens (103) wenigstens zwei alternative Software-Codes mit jeweils wenigstens einem injizierten Fehler generiert werden und im Rahmen des Bewertens (104) die Tests für die wenigstens zwei alternativen Software-Codes separat bewertet werden.

8. Verfahren (100) nach einem der vorhergehenden Ansprüche,
**dadurch gekennzeichnet,**
**dass** der wenigstens eine injizierte Fehler spezifisch für einen technischen Kontext des technischen Systems (1) und/oder des Software-Codes ist.

9. Computerprogramm (20), umfassend Befehle, die bei der Ausführung des Computerprogramms (20) durch wenigstens einen Computer (10) diesen veranlassen, das Verfahren (100) nach einem der vorhergehenden Ansprüche auszuführen.

10. Vorrichtung (10) zur Datenverarbeitung, die eingerichtet ist, das Verfahren (100) nach einem der Ansprüche 1 bis 8 auszuführen.

11. Computerlesbares Speichermedium (15), umfassend Befehle, die bei der Ausführung durch wenigstens einen Computer (10) diesen veranlassen, die Schritte des Verfahrens (100) nach einem der Ansprüche 1 bis 8 auszuführen.
